# EUROPEAN PATENT SPECIFICATION

(11) **EP 0 841 512 B1**
(45) Date of publication and mention of the grant of the patent: **26.09.2001**
(21) Application number: 97202941.7
(22) Date of filing: 25.09.1997
(51) Int. Cl.: F16L 3/10

(54) **An assembly clip**
Befestigungsschelle
Collier de fixation

(30) Priority: 01.11.1996 SE 9603993
(43) Date of publication of application: 13.05.1998
(73) Proprietor: Isco AB, 330 33 Hillerstorp (SE)
(72) Inventor: Danielsson, Ulf, 330 33 Hillerstorp (SE); Holmström, Roland, 330 33 Hillerstorp (SE)
(74) Representative: Wallengren, Yngvar

(56) References cited:
- DE-A- 2 259 172
- DE-A- 2 754 697
- DE-A- 3 708 065
- DE-B- 1 811 297
- FR-A- 2 640 349
- US-A- 1 805 006

## Description

### TECHNICAL FIELD

The present invention relates to an assembly clip for securing an elongate object, such as a tube or a wire on a substrate, and comprising a body which has an accommodation portion for accommodating and retaining the object, and a clamping portion with two clamping members, which by means of a joint are movable towards and away from one another for clamping together or flaring, respectively for permitting insertion and removal of the object into and out of the accommodation portion, and which serve for securing the assembly clip on the substrate, and a protective member of flexible, resiliently yieldable or elastic material disposed to cover at least the major portion of the surface of the accommodation portion facing towards the object Such an assembly is known from DE-A-3 708 065.

### BACKGROUND ART

Assembly clips of the type intimated by way of introduction are employed to a very great extent in the automotive industry for mounting electric wiring and conduits or tubes in place.

Similar assembly clips are also used in the construction industry for securing such items as electric wires or cables.

Within the automotive industry, attempts are constantly being made to shorten assembly times as far as this is at all possible. A prior art assembly clip must first be bent up by the fitter in order to be forced over the conduit or electric wire and then be closed once again before being screwed in place. In this instance, the assembly clip has considerable, residual resilience which strives to open the clip at the same time as it is to be screwed in place. This entails that the operation of screwing the clip in place is rendered considerably more difficult, since, on the one hand, the assembly clip must be compressed and, on the other hand, the screw be mounted in place and turned for engagement in a thread.

In heavy-duty assembly clips, the force that is required for compressing the clip may, in addition, be so great that assembly work over a lengthy period of time becomes actually physically fatiguing, with the risk of strain injuries as a result.

Assembly clips are also previously known in the art which are manufactured from plastic and are designed in the manner disclosed by way of introduction. These assembly clips are, granted, easy to open and dose about the object which is to be assembled, but the clips suffer from seriously defective mechanical strength, serious ageing properties and insufficient temperature resistance to be generally usable within motor vehicle manufacture.

DE-A-2 754 697 also discloses an assembly clip having a base member and a pivotable lid member, said base member and said lid member forming together, in the closed position of the assembly clip, a circular accommodation space for the object to be fastened by the clip. To close the clip the free end of the lid member and the base member have inter engaging locking means incorporating a spring action that has to be overridden when closing the clip.

In this clip the lid member is freely pivotable and therefore it can resume any position before the clip is closed.

### PROBLEM STRUCTURE

The present invention has for its object to design the assembly clip disclosed by way of introduction such that it obviates the drawbacks inherent in prior art methods and devices. In particular, the present invention has for its object to realise an assembly clip which, in an extremely simple and convenient manner, may be applied to the object which is to be assembled in place. Further, the present invention has for its object to realise an assembly clip which is simple and economical in manufacture, which possesses superior ageing properties, superior temperature resistance and of course also the requisite high mechanical strength performance. Finally, it is an advantage if the assembly clip is also kept open in the unloaded state, i.e. prior to the assembly phase proper.

### SOLUTION

The objects forming the basis of the present invention will be attained if the assembly clip intimated by way of introduction is characterized by a spring element which strives to hold the assembly clip open in the unloaded state, said spring element consisting of the protective member (8).

Further advantages will be attained according to the present invention if the assembly clip is also given one or more of the characterizing features as set forth in appended Claims 2 to 6.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: is a plan view of the assembly clip according to the present invention;
- Fig. 2: is a side elevation of the assembly clip of Fig. 1; and
- Fig. 3: is a section taken along the section marking A-A in Fig. 2.

### DESCRIPTION OF PREFERRED EMBODIMENT

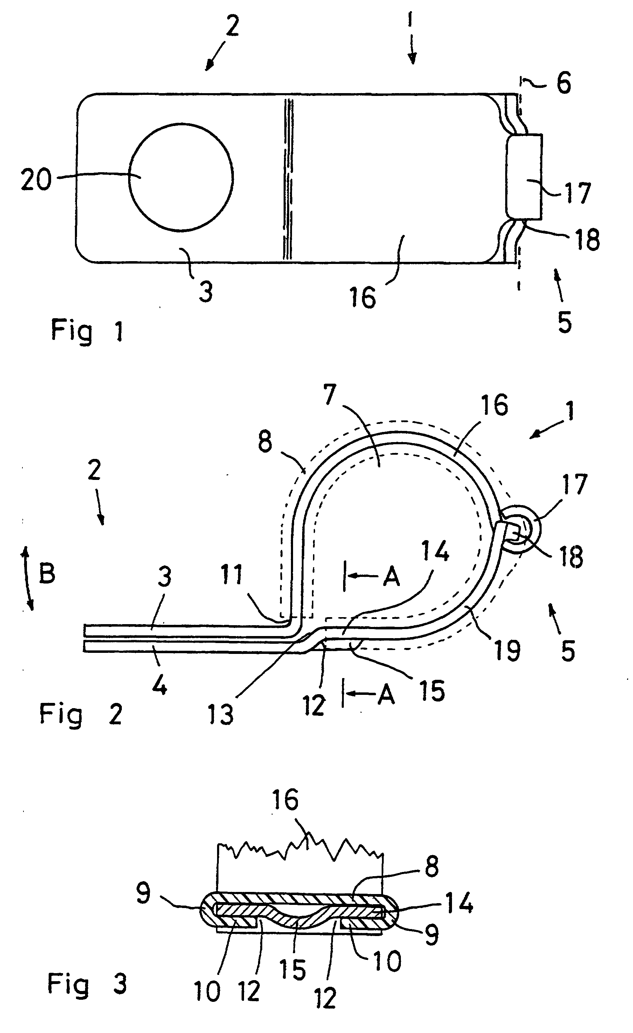

It will be apparent from Figs. 1 and 2 taken together that the assembly clip has an accommodation portion 1 and a clamping portion 2. The accommodation portion is intended for accommodating and retaining the (preferably elongate) object which is to be assembled in place. The term object in this context may, for example, be taken to signify conduits, tubes, wires and the like.

The damping portion 2 includes two clamping members 3 and 4 which are reciprocal towards and away from one another for closing and opening the assembly clip, respectively, and in particular its accommodation portion 1 with the accommodation space 7. Of the clamping members, the clamping member 4 may be considered as a lower damping member which is intended to abut against the substrate against which or on which the elongate object is to be assembled. In relation to this lower clamping member 4, the upper clamping member 3 is pivotal in accordance with the doubleheaded arrow B. In order to permit this pivoting of the one clamping member in relation to the other, the assembly clip has a joint or hinge device 5 which is disposed in the region of the accommodation portion 1. Preferably, the joint device 5 is disposed at the end of the accommodation portion which is most distal from the damping portion 2.

The joint device 5 has a pivot axis 6 which is approximately parallel with the longitudinal direction of the object which, in its assembled state, is to be accommodated in the accommodation space 7 of the accommodation portion 1.

The accommodation space 7 may have approximately cylindrical configuration, but may of course be of other suitable configuration, such as rectangular, square, hexagonal or any other suitable configuration which is adapted to the object which is to be secured. In the embodiment illustrated in Fig. 2, the accommodation space 7 has, along roughly three-quarters of its contour, the form of a cylinder while the remaining quarter is defined by approximately planar walls which are directed tangentially to the cylinder and intersect one another at approximately right angles.

In order to improve the grip between the assembly clip and the assembled object, but also to make the assembly operation somewhat flexible and further to prevent rattling, scraping or other inconvenient noise, the clip according to the present invention has a protective portion 8 produced from a flexible, resiliently yieldable or elastic material and shown by broken lines in Fig. 2, while also being shown in cross section in Fig. 3. The protective portion 8 covers at least the major part of the defining surface of the accommodation space, i.e. the greater part of the inner surface in the accommodation portion 1. A suitable material for the protective portion 8 may be different types of rubber qualities, or plastic qualities which, in applications for motor vehicles, are generally selected to be both oil-resistant and age-resistant. Naturally, the material of the protective portion 8 must also be capable of withstanding the temperature levels that are relevant in this context

It will be apparent from Fig. 3 that the protective portion 8 has a cross-sectional configuration which may be characterized as a tall, slim C-shape. The protective portion 8 thus has end portions 9 which are located outside the side edges of the substantially rigid, band- or strip-shaped material from which the body of the assembly clip is manufactured. Further, the protective portion 8 has outer portions 10 which are located on the outside of the accommodation portion 1.

So as not to initiate crack formation as a result of large flexural stresses in the material of the protective portion 8 in the region of the joint device 5, it is advantageous if the protective portion is designed so that it does not cover the outside of the joint device. As a result, the protective portion 8 is suitably provided on its outside with an aperture which at least exposes the joint device. Preferably however, the aperture extends throughout the entire length of the protective portion so that this will have in its entirety the above-mentioned tall, slim C-shaped cross section. This design also entails considerably simplified mounting of the protective portion 8.

Given that the protective portion 8 is produced from a resiliently yieldable or elastic material, it can be given the function of a spring element which strives to hold the assembly clip in the open state when this is not subjected to any force. This implies that the assembly clip, on use, is grasped by the assembly fitter and only closed about the object which is to be assembled in place. No opening of the clip prior to assembly is necessary in this embodiment.

In order to prevent the protective portion 8 from being displaced in its longitudinal direction, i.e. in the circumferential direction of the accommodation portion 1, the body has, in the transitional region between the accommodation portion 1 and the clamping portion 2, arrest surfaces 11 and 12 against which the end surfaces of the protective portion 8 can abut.

It will be apparent from Fig. 2 that the assembly clip has, in the transitional region between the lower clamping member 4 and the accommodation portion 1, and in the region of the arrest surface 12, an S- or Z-shaped bend 13 and an embossed portion 15. The purpose of the bend 13 is to realise a parallel displacement (or an approximately parallel displacement) between the damping member 4 and the portion 14 of the accommodation portion 1 located most proximal the lower clamping member 4. As a result, there will be formed a space between a plane through the surface of the clamping member 4 facing towards the substrate and the underside of the proximal portion 14. The height or thickness of this space is sufficient to encompass the outer portions 10 of the protective portion 8, but also implies that a certain distance is created between the object secured by the assembly clip and the substrate. This avoids noise caused by vibrations or deformations in the assembled object.

The embossed region 15 serves a dual purpose, namely first to rigidify the transitional region between the accommodation portion 1 and the clamping portion 2 and, secondly, to assist in positionally fixing the protective portion 8 which, on its outside, has a recess for housing the embossed region 15.

The joint device 5 is realised in that the upper portion 16 of the accommodation portion 1 has a tongue 17 which has been recurved into tubular form. A joint portion 18 is accommodated in the tubular portion and is disposed on the lower portion 19 of the accommodation portion. In such instance, the tongue 17 extends through an aperture (not shown on the Drawings) beneath the joint portion 18 of the lower portion 19. Alternatively, the tongue 17 may be disposed on the lower portion 19 of the accommodation portion 1, in which event the aperture not shown on the Drawings is disposed on the upper portion 16 of the accommodation portion for passage of the tongue.

For mounting the subject matter of the present invention on the substrate, the clamping portion 2 has a through-going aperture 20 for accommodating an anchorage device such as a screw, a rivet, or the like.

## Claims

1. An assembly clip for securing an elongate object, such as a tube or a wire on a substrate, and comprising a body which has an accommodation portion (1) for accommodating and retaining the object, and a clamping portion (2) with two damping members (3, 4), which by means of a joint (5) are movable towards and away from one another for damping together or flaring, respectively for permitting insertion and removal of the object into and out of the accomodation portion, and which serve for securing the assembly clip on the substrate, and a protective member (8) of flexible, resiliently yieldable or elastic material disposed to cover at least the major portion of the surface of the accommodation portion (1) facing towards the object, **characterized by** a spring element which strives to hold the assembly clip open in the unloaded state, said spring element consisting of the protective member (8).

2. The assembly clip as claimed in claim 1, **characterized in that** there are provided, in the transitional region between the accommodation portion (1) and the clamping portion (2), arrest surfaces (11, 12) which prevent displacement of the protective member (8) wholly or partly in onto the clamping portion (2).

3. The assembly clip as claimed in any of claims 1 and 2, **characterized in that** the joint (5) is located on the side of the accommodation portion (1) facing away from the clamping portion (2).

4. The assembly clip as claimed in any of claims 1 to 3, **characterized in that** the protective member (8) has, on the outside of the clamp, an aperture wherein the joint (5) is at least partly exposed.

5. The assembly clip as claimed in claim 4, **characterized in that** the aperture is in the form of a slot which extends throughout the entire length of the protective portion.

6. The assembly clip as claimed in any of claims 1 to 5, **characterized in that** the end portion of the protective member (8) disposed most proximal the substrate and the clamping portion (2) is located between a plane along the surface of the damping portion (2) facing towards the substrate and the outside of the accommodation portion (1).

## Patentansprüche

1. Eine Befestigungsschelle zur Befestigung eines länglichen Objektes, wie ein Rohr oder ein Kabel auf einem Substrat, umfassend einen Körper, welcher einen Aufnahmeabschnitt (1) zur Aufnahme und zum Festhalten des Objektes aufweist sowie einen Klemmabschnitt (2) mit zwei Klemmgliedern (3, 4), welche durch eine Gelenkeinrichtung (5) aufeinander zu und voneinander weg beweglich miteinander befestigt sind, zum Zusammenklemmen oder Erweitern, bzw. um das Einführen oder Entfernen eines Objektes in den Befestigungsabschnitt oder daraus heraus zu erlauben, und welcher zur Sicherung der Befestigungsschelle an dem Substrat dient, sowie einem Schutzglied (8) aus einem flexiblen, elastisch erhaltbaren oder elastischen Material, so angeordnet um wenigstens den Hauptabschnitt der Oberfläche des Aufnahmeabschnitts (1) abzudecken und welches in Richtung auf das Objekt ausgerichtet ist, **gekennzeichnet durch** ein Federelement, welches die Befestigungsschelle in dem unbeladenen Zustand offenhält, wobei das Federelement aus dem Schutzglied (8) besteht.

2. Eine Befestigungsschelle nach Anspruch 1, **dadurch gekennzeichnet, daß** sie Sperroberflächen (11, 12) bereitstellt, in dem Übergansbereich zwischen dem Aufnahmeabschnitt (1) und dem Klemmabschnitt (2), welche eine Verschiebung des Schutzgliedes (8) teilweise oder vollständig auf den Klemmabschnitt (2) verhindern.

3. Befestigungsschelle nach einem der Ansprüche 1 oder 2, **dadurch gekennzeichnet, daß** die Verbindungen (5) auf der Seite des Aufnahmeabschnittes (1) angeordnet sind, die von dem Klemmabschnitt (2) weggerichtet ist.

4. Befestigungsschelle nach einem der Ansprüche 1 bis 3, **dadurch gekennzeichnet, daß** das Schutzglied (8) auf der Außenseite der Klammer eine Öffnung aufweist, worin die Verbindung (5) wenigstens teilweise herausgestellt ist.

5. Eine Befestigungsschelle nach Anspruch 4, **dadurch gekennzeichnet, daß** die Öffnung die Form eines Schlitzes aufweist, welcher sich durch die gesamte Länge des Schutzabschnittes erstreckt.

6. Befestigungsschelle nach einem der Ansprüche 1 bis 5, **dadurch gekennzeichnet, daß** der Endabschnitt des Schutzgliedes (8), angeordnet möglichst nahe des Substrates und des Klemmabschnittes (2), sich zwischen einer ebenen Fläche entlang der Oberfläche des Klemmabschnittes (2) befindet, welcher in Richtung des Substrates und der Außenseite des Aufnahmeabschnittes (1) ausgerichtet ist.

## Revendications

1. Collier de fixation pour fixer un objet allongé, tel qu'un tube ou un câble, sur un substrat, et comprenant un corps qui comporte une partie de réception (1) pour recevoir et retenir l'objet et une partie de serrage (2) ayant deux éléments de serrage (3, 4) qui peuvent se rapprocher et s'éloigner l'un de l'autre au moyen d'une articulation (5) pour serrage ou écartement mutuel, respectivement pour permettre l'insertion et l'enlèvement de l'objet dans et hors de la partie de réception, et qui servent à fixer le collier de fixation sur le substrat, et un élément de protection (8) en matière flexible, élastiquement déformable ou élastique, disposé de manière à couvrir au moins la majeure partie de la surface de la partie de réception (1) en regard de l'objet, **caractérisé par** un élément élastique qui tend à maintenir le collier de fixation ouvert dans l'état sans charge, le dit élément élastique étant constitué par l'élément de protection (8).

2. Collier de fixation selon la revendication 1, **caractérisé en ce qu'**il est prévu, dans la région de transition entre la partie de réception (1) et la partie de serrage (2), des surfaces d'arrêt (11, 12) qui empêchent le déplacement de l'élément de protection (8) en totalité ou en partie sur la partie de serrage (2).

3. Collier de fixation selon une quelconque des revendications 1 et 2, **caractérisé en ce que** l'articulation (5) est située sur le côté de la partie de réception (1) à l'opposé de la partie de serrage (2).

4. Collier de fixation selon une quelconque des revendications 1 à 3, **caractérisé en ce que** l'élément de protection (8) comporte, sur le côté extérieur du collier, une ouverture dans laquelle l'articulation (5) est visible au moins en partie.

5. Collier de fixation selon la revendication 4, **caractérisé en ce que** l'ouverture est sous la forme d'une fente qui s'étend sur toute la longueur de la partie de protection.

6. Collier de fixation selon une quelconque des revendications 1 à 5, **caractérisé en ce que** la région d'extrémité de l'élément de protection (8) la plus proche du substrat et de la partie de serrage est placée entre un plan passant le long de la surface de la partie de serrage (2) tournée vers le substrat et l'extérieur de la partie de réception (1).
